**Europäisches Patentamt**

**European Patent Office**

**Office européen des brevets**

(11) Veröffentlichungsnummer : **0 109 963
B1**

# (12) EUROPÄISCHE PATENTSCHRIFT

(45) Veröffentlichungstag der Patentschrift :
05.03.86

(21) Anmeldenummer : **82110906.3**

(22) Anmeldetag : **25.11.82**

(51) Int. Cl.⁴ : **H 04 N   7/08**

(54) **Einrichtung zur Bildträgeraufbereitung von Fernsehsignalen.**

(43) Veröffentlichungstag der Anmeldung :
**13.06.84 Patentblatt 84/24**

(45) Bekanntmachung des Hinweises auf die Patenterteilung : **05.03.86 Patentblatt 86/10**

(84) Benannte Vertragsstaaten :
**AT CH DE GB IT LI NL SE**

(56) Entgegenhaltungen :
FR-A- 2 165 798
US-A- 3 898 566
FERNMELDE-PRAXIS, Band 47, Nr. 14, 25. Juli 1970, Seiten 581-591, Berlin, DE., N. VOGT: "Betrieb von Fernsehsendern der DBP mit Präzisionsoffset der Bildträgerfrequenzen"
ELECTRONIC COMPONENTS AND APPLICATIONS, Band 2, Nr. 2, Februar 1980, Seiten 91-105, Eindhoven, NL., T.G. GILES: "Versatile LSI frequency synthesiser system"
SIEMENS REVIEW, Band 43, Nr. 3, 1976, Seiten 91-96, Erlangen, DE., H. BIEBL et al.: "Modern headend for CATV"
RUNDFUNKTECHNISCHE MITTEILUNGEN, Band 16, Nr. 1, Ferbuar 1972, Seiten 22-32, Hamburg, DE., M. AIGNER: "Der Einfluss des Offsetbetriebes von Fernsehsendern auf den Tonstörabstand"
FUNKSCHAU, nr. 25, 1979, Seiten 75-78, München, DE., P. MEYRAT: "Vergrösserung der Übertragungskapazität von Kabelfernsehnetzen"
FUNKSCHAU, Band 48, Nr. 12/13, Juni 1976, Seiten 123-126, München, DE., F. SCHALAMON: "Neue Kopfstelle für GGA und Fernsehverteilanlagen "

(73) Patentinhaber : **Richard Hirschmann Electric
Oberer Paspelsweg 6-8
A-6830 Rankweil-Brederis (AT)**

(72) Erfinder : **Ludwig, Helmuth
L. Weltistrasse 8a
A-6845 Hohenems (AT)**
Erfinder : **Poppa, Heinz**

**A-6832 Röthis 212 (AT)**

(74) Vertreter : **Stadler, Heinz, Dipl.-Ing.
Richard Hirschmann Radiotechnisches Werk
Richard-Hirschmann-Strasse 19
D-7300 Esslingen a.N. (DE)**

**Beschreibung**

Die Erfindung betrifft eine Einrichtung zur Bildträgeraufbereitung von Fernsehsignalen durch phasenstarre Verkopplung der Bildträger mittels Anbindung der einzelnen Bildträgerfrequenzen an jeweils eine Referenzfrequenz und durch einen definierten Frequenzversatz zwischen diesen Signalen, mit einer aus einer Phasenvergleichsschaltung, einem in seiner Frequenz von dieser geregelten Oszillator und einem damit gesteuerten Mischer bestehenden PLL-Schaltung, bei der die Phasenver-gleichsschaltung zum einen von dem aus dem jeweiligen Nutz-signal abgeleiteten Fernseh-Norm-ZF-Signal und zum anderen von dem um die von einem entsprechenden Generator erzeugte Versatzfrequenz versetzten, vom Mischer aus dem Oszillatorsignal und einem aus einer Referenzsignalquelle Stammenden Referenzsignal gewonnenen Referenz-ZF-Signal angesteuert ist.

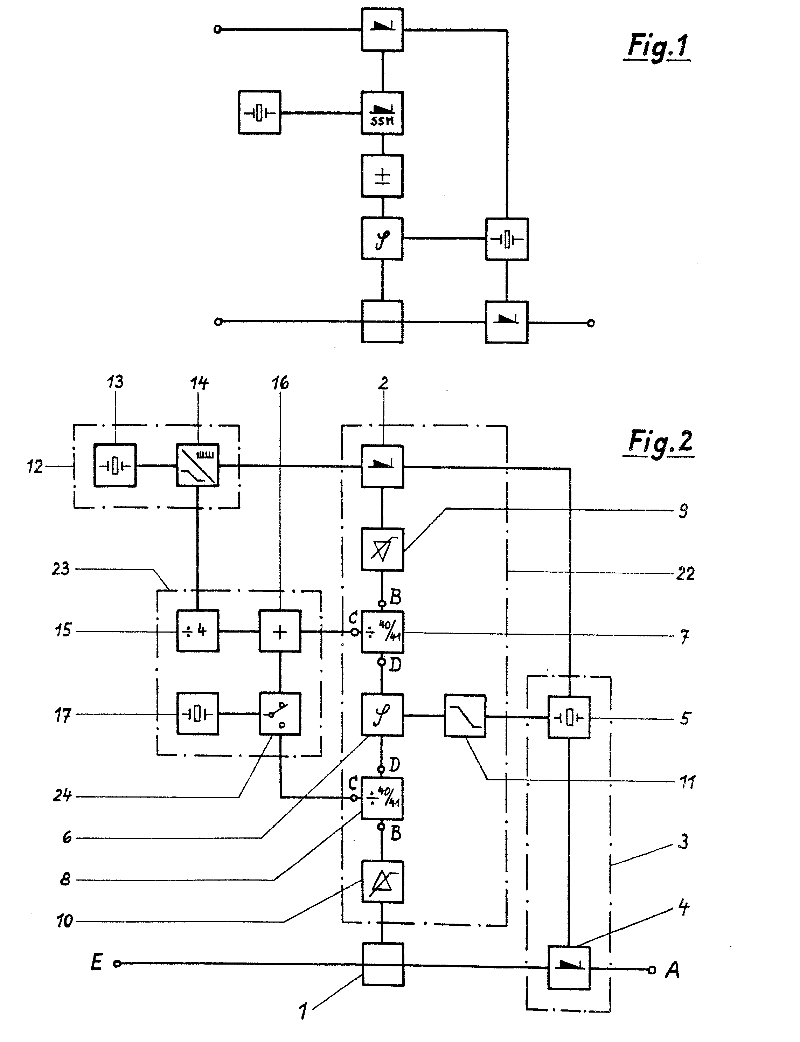

Derartige, in Fig. 1 im Prinzip dargestellte Einrichtungen sind beispielsweise aus den Zeitschriftenveröffentlichungen « Verbesserung der Kabelfernsehübertragung durch ein optimales kohärentes Trägersystem », Rundfunktechnische Mitteilungen 1979, H. 5, S. 209 f., sowie « Vergrößerung der Übertragungskapazität von Kabelfernsehnetzen », FUNKSCHAU 1979, H. 25, S. 75 f. und « Schutzabstände für den Gleichkanalbetrieb von Fernsehsendern bei Modulation mit PAL-Farbfernsehsignalen », Rundfunktechnische Mitteilungen 1969, H. 6, S. 284 f. bekannt. Sie dienen dazu, den Störeindruck zu vermindern, der bei Einzelkanalempfang durch Gleichkanalstörungen (z. B. bei Direkteinstrahlung des Ortssendersignals in Empfänger oder durch Überreichweiten benachbarter Sender) entsteht und bei Mehrkanalübertragung aufgrund nichtlinearer Verzerrungen beispielsweise in Streckenverstärkern von Breitbandkabelnetzen. Entsprechend diesen beiden Einsatzfällen wird dabei entweder das Ortssendersignal oder je ein besonderes Frequenzaufbereitungsgerät als Referenzsignalquelle für den bzw. die Bildträger der einzelnen Kanäle verwendet.

Die störungsreduzierenden Maßnahmen der phasenstarren Trägerverkopplung und des Frequenzversatzes ermöglichen bei Mehrkanalübertragung entweder eine Erhöhung der Kanalbelegung, also der Programmkapazität in bereits bestehenden Netzen oder eine Vergrößerung der Streckenlänge bei gleicher Anzahl von Verstärkern und somit eine Kostensenkung.

In der Praxis hat es sich als günstig erwiesen, eine Versatzfrequenz von n/12 x Zeilenfrequenz zu wählen, wobei n eine ganze Zahl ist und sich ein besonders geringer Störeindruck für n = 8 ergibt. Diese Versatzfrequenz von aufgerundet 10,45 kHz liegt aber um mehr als drei Zehnerpotenzen unter der Referenz-ZF; dadurch ist ein Herausfiltern des bei der Mischung dieser beiden Frequenzen entstehenden gewünschten Seitenbandes (38,9 MHz-10,45 kHz) wegen seines geringen Abstandes von der Trägerfrequenz (38,9 MHz) unmöglich, sodaß seither nur der Weg der Unterdrückung des Trägers und des unerwünschten Seitenbandes mit Hilfe eines Single-Sideband-Mischers (SSM) zur Verfügung stand. Dieser bedingt jedoch einen aufwendigen Abgleich, der nicht nur für beide Eingänge des SSM bezüglich Phase und Amplitude und für jede Versatzfrequenz neu durchzuführen ist, sondern auch hochwertige und teuere Meßgeräte erfordert. Außerdem muß der Pegel an diesen beiden Eingängen konstant gehalten werden, wofür eine weitere Erhöhung des Schaltungsaufwandes nötig ist.

Der Erfindung liegt die Aufgabe zugrunde, eine Einrichtung der eingangs genannten Art derart auszubilden, daß die störreduzierenden Maßnahmen mit möglichst geringem Schaltungs- und Arbeitsaufwand erreicht sind.

Diese Aufgabe ist dadurch gelöst, daß jedem der beiden Eingänge der Phasenvergleichsschaltung einer von zwei digitalen Frequenzteilern vorgeschaltet und einer davon derart von dem Versatzsignal angesteuert ist, daß sich sein Teilfaktor im Takte des Versatzsignales verändert.

Die Verwendung eines digitalen Frequenzteilers in einer PLL-Schaltung ist zwar zum Beispiel aus dem Buch « Funktechnik ohne Ballast » von O. Limann, Franzis-Verlag, 12. Auflage 1972, S. 150, an sich bekannt, jedoch nicht zur Lösung der erfindungsgemäßen Aufgabe und insbesondere mit festem Teilfaktor. Im Gegensatz dazu wird der Teilfaktor des vom Versatzsignal angesteuerten Frequenzteilers bei der Erfindung im Takte des Versatzsignales umgeschaltet (z. B. von 40 auf 41 bzw. umgekehrt), wobei die Phasenvergleichsschaltung die unterschiedliche Periodendauer der beiden digitalen Teilerausgangssignale miteinander vergleicht und die Ziehspannung für den Oszillator erzeugt. Dieser regelt solange nach, bis die Referenz-ZF und damit in gewünschter Weise auch die Frequenz des Ausgangssignals der Einrichtung genau um die Versatzfrequenz verändert ist. Der Frequenzteiler wirkt somit zugleich als Addier- bzw. Subtrahierglied, während bei Benutzung von Frequenzteilern mit festem Teilverhältnis ein solches Bauteil zusätzlich nötig ist.

Außerdem ist die erfindungsgemäße Einrichtung in der Lage, im Gegensatz zu dem bekannten SSM, der wegen seiner Frequenzabhängigkeit für jede Versatzfrequenz neu abgestimmt werden muß, Versatzfrequenzablagen von breitbandig 0,2 bis etwa 800 kHz zu verarbeiten.

Darüberhinaus liegt der Betriebsfrequenzbereich der Phasenvergleichsschaltung bei Einsatz von Frequenzteilern mit praktisch sinnvollen Teilfaktoren so tief, daß billige CMOS-Bauteile anstatt der beim Stand der Technik nötigen teuren diskreten Schaltungen oder ECL-Bausteine verwendbar sind.

Bei der in Anspruch 1 beschriebenen Einrichtung verändert der Oszillator der PLL seine Frequenz im Takte des Versatzsignals, wodurch das Nutzsignal am Ausgangsmischer frequenzmoduliert ist. Zur Vermeidung dieses unerwünschten Effektes ist gemäß der in Anspruch 2 angegebenen vorteilhaften Ausgestaltung der Erfindung ein zwischen Phasenvergleichsschaltung und Oszillator eingeschalteter Tiefpaß mit entsprechender Zeitkonstante vorgesehen.

Die Festlegung der Größe der beiden Teilfaktoren wird außer von dem gewünschten Ausgangsfrequenzbereich der Frequenzteiler auch davon bestimmt, daß mit zunehmendem Unterschied der Teilfaktoren der betreffende Frequenzteiler weniger oft umgeschaltet und die Realisierung der Zeitkonstante des Tiefpasses dadurch zunehmend schwieriger wird. Es ist daher vorteilhaft, eine möglichst hohe Frequenz der Umschaltung von einem Teilfaktor auf den anderen und somit bei vorgegebener Versatzfrequenz einen möglichst geringen ganzzahligen Unterschied der Teilfaktoren zu wählen. Die Ausführung nach Anspruch 3 stellt dafür eine optimale Lösung dar.

Eine wesentliche Vereinfachung der erfindungsgemäßen Einrichtung besteht nach Anspruch 4 darin, eine einzige Referenzsignalquelle zur Erzeugung der Referenzsignale aller aufzubereitenden Fernsehkanäle vorzusehen. Dadurch ist nicht mehr wie bisher für jeden Kanal eine eigene Referenzaufbereitung nötig.

Eine besonders zweckmäßige Ausführung dieser kostengünstigen Referenzsignalquelle ist in Anspruch 5 beschrieben. Am Ausgang der Einrichtung sind dadurch auf ebenso einfache wie elegante Weise die Bildträgerfrequenzen normgerecht im CCIR-Raster erzeugt. Dabei muß die Frequenz von 1 MHz nicht unbedingt von einem Oszillator erzeugt sein, sie kann vielmehr auf einfache Weise auch von einer, beispielsweise von Normalfrequenz-Sendern ausgesandten Leitfrequenz hergeleitet werden. In diesem Fall ist es auch möglich, Fernsehsender bzw. -umsetzer unabhängig von der Genauigkeit der Eingangs-ZF-Frequenz mit Präzisionsfrequenz und/oder Präzisionsoffset des Bildträger-Ausgangssignals zu betreiben.

Eine Alternative zu dieser Ausführung gemäß Anspruch 5 ist in Anspruch 6 angegeben. Bei ihr ist der Frequenzteiler zur Generierung des 250-kHz-Signals eingespart, dafür allerdings der Kammgenerator aufwendiger.

Ist im Einzelfall zu jedem Kanal ein individueller Offset gewünscht, so ist dies nach Anspruch 7 ohne weiteres durch Zuschalten eines Offsetsignals entweder über ein Addierglied an den im Referenz-ZF-Zweig oder direkt an den im ZF-Zweig liegenden Frequenzteiler möglich.

In Anspruch 8 ist eine einfache, aber dennoch zuverlässig funktionierende Ausgestaltung der erfindungsgemäßen Einrichtung mit besonders geringem Schaltungsaufwand angegeben.

Durch eine Ergänzung gemäß Anspruch 9 kann diese Schaltung Versatz- und/oder Offsetsignale der doppelten Frequenz verarbeiten.

Die erfindungsgemäße Bildträger-Aufbereitungseinrichtung ist insbesondere aufgrund der Ausbildung gemäß den Ansprüchen 1 und 4 im Gegensatz zum Stand der Technik bestens für den anwendungs- und kostengünstigen Aufbau im Baukastensystem geeignet. Dafür kommen z. B. folgende Bausteine in Betracht :

Modul 1, bestehend aus den beiden Frequenzteilern, der Phasenvergleichsschaltung incl. Tiefpaß, dem Mischer und je einem Begrenzerverstärker zwischen Mischer und dem einen Frequenzteiler, sowie zwischen dem anderen Frequenzteiler und dem ZF-Anschluß,

Modul 2, bestehend aus einem 1-MHz-Oszillator mit nachgeschaltetem Kammgenerator,

Modul 3, bestehend aus Offset-Generator und mechanischem Umschalter,

Modul 4, bestehend aus einem Frequenzteiler zur Generierung des 250-kHz-Signals aus dem 1-MHz-Signal,

Modul 5, bestehend aus den Modulen 3 und 4, sowie einer Addierschaltung.

Damit ist es möglich, die Aufbereitungseinrichtung auf einfache Weise nach den Bedürfnissen des Einzelfalles entweder zur Anbindung an den Ortssender oder zur Frequenzverkopplung in Mehrkanalanlagen, sowohl bei harmonischer als auch bei inkrementaler Verkopplung, ohne oder mit Offset optimal zu modifizieren. Dadurch ist sowohl die Anwendung als auch der Schaltungsaufwand vereinfacht.

Insgesamt ist durch die Erfindung ein äußerst einfach und kostengünstig aufgebautes, praxisgerechtes Bildträgeraufbereitungssystem geschaffen.

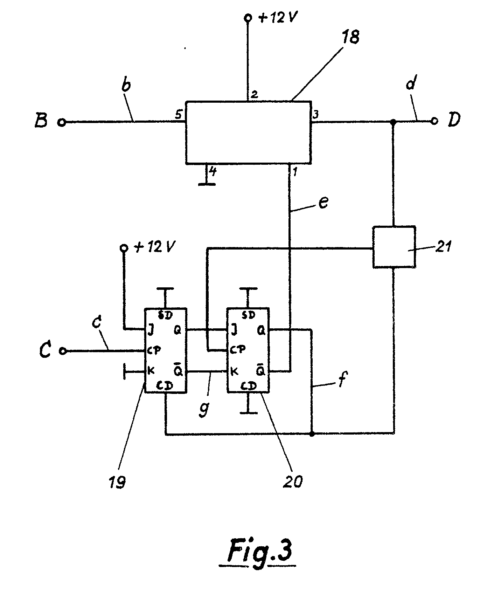

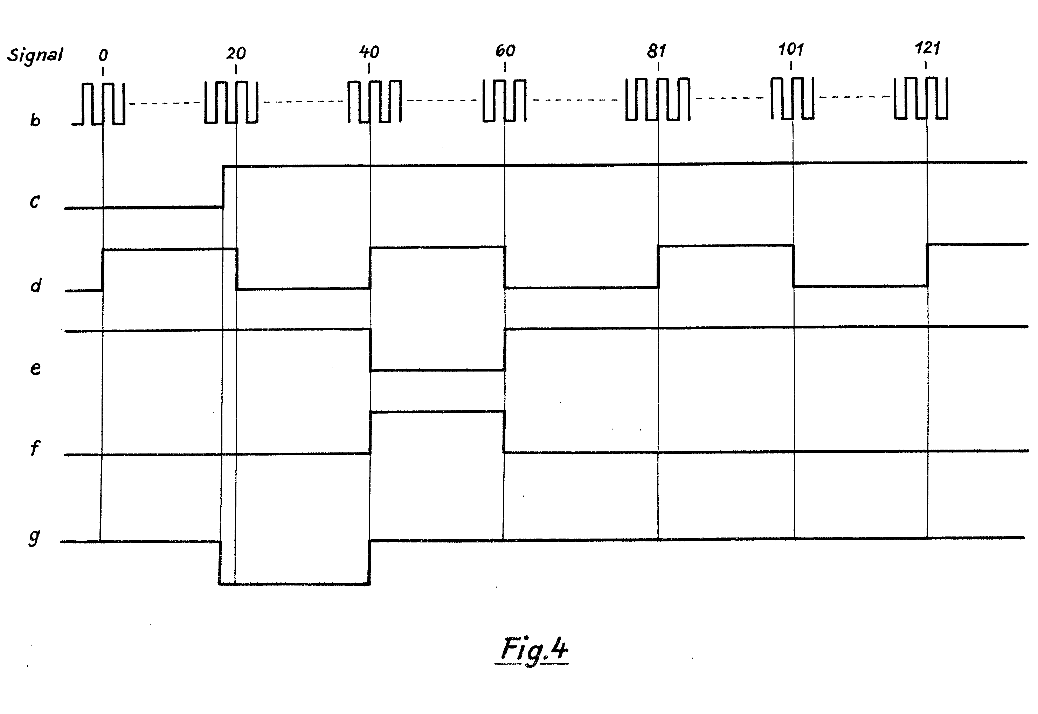

In den Figuren 2 bis 4 ist ein Ausführungsbeispiel der erfindungsgemäßen Bildträgeraufbereitungs-Einrichtung für Mehrkanalübertragung in einer BK-Anlage dargestellt. Dabei zeigt Fig. 2 ein Blockschaltbild ihres prinzipiellen Aufbaus, Fig. 3 das Prinzipschaltbild eines Frequenzteilers und Fig. 4 die wichtigsten Signale dieser Schaltung in einem Impulsdiagramm.

Das am Eingang E von einem nicht dargestellten Eingangsumsetzer abgegebene, über einen Abzweiger 1 ausgekoppelte jeweilige Bildträger-ZF-Signal wird in einer PLL-Regelschleife mit einem entsprechenden, von dem Mischer 2 der PLL-Schaltung aus einem Referenz-Bildträgersignal abgeleiteten, um einen Offset in der Frequenz versetzten Referenz-Bildträger-ZF-Signal phasenstarr verkoppelt und mit einem Ausgangsumsetzer 3 in die Bildträger-Frequenzlage am Ausgang A rückumgesetzt, wobei der Mischer 4 des Ausgangsumsetzers 3 zwischen Eingang E und Ausgang A eingeschaltet ist und sein Oszillator 5 zugleich als Regeloszillator der PLL-Schaltung arbeitet.

Den beiden Eingängen der Phasenvergleichsschaltung 6 der PLL-Schaltung ist nun jeweils ein digitaler Frequenzteiler 7, 8 vorgeschaltet, deren Teilfaktor im Takte eines digitalen Versatzsignales von 40 auf 41 umschaltbar ist. Damit die Frequenzteiler 7, 8 verarbeitbare, also von der Modulation unabhängige Signale erhalten, durchlaufen die zu vergleichenden ZF-Signale vorher jeweils einen entsprechenden Begrenzerverstärker 9, 10. Ohne Versatzsignal haben die Frequenzteiler 7, 8 den Teilfaktor 40, so daß an den Eingängen der Phasenvergleichsschaltung 6 zunächst Signale der Frequenz $1/40 \times f_{RefZF}$ bzw. $1/40 \times f_{ZF}$ anliegen ; über die PLL-Regelschleife wird dann die Frequenz des Oszillators 5 solange nachgezogen, bis die beiden Signale Phasengleichheit und damit auch dieselbe Frequenz, nämlich 38,9/40 MHz = 972,5 kHz aufweisen. Die Herunterteilung der Zwischenfrequenz in diesen Frequenzbereich ermöglicht den Aufbau der Phasenvergleichsschaltung 6 aus preisgünstigen CMOS-Bausteinen (hier « HEF 4046 B »).

Wird nun in einen der beiden Frequenzteiler, im vorliegenden Ausführungsbeispiel in den im Referenzzweig liegenden Frequenzteiler 7, ein Versatzsignal eingespeist, so ändert sich dessen Teilfaktor im Takte dieses Versatzsignals von 40 auf 41. Bei jeder Umschaltung auf den Teilfaktor 41 ist die Ausgangssignalperiode dieses Frequenzteilers 7 größer als die des anderen Frequenzteilers 8, so daß durch die PLL-Schaltung nachgeregelt wird. Dabei vermeidet ein zwischen Phasenvergleichsschaltung 6 und Oszillator 5 eingeschalteter Tiefpaß 11, daß sich die Oszillatorfrequenz im Takte des Versatzsignals ändert und das Bildträger-Ausgangssignal dadurch frequenzmoduliert wird.

Wie bereits ausgeführt, ist die Realisierung der Zeitkonstante dieses Tiefpasses 11 umso einfacher, je höher die Umschaltfrequenz des Teilfaktors ist. Eine optimale Dimensionierung ergibt sich daher bei gegebener Versatzfrequenz für eine Teilfaktoränderung von n auf n + 1, im vorliegenden Ausführungsbeispiel also von 40 auf 41.

Durch die beschriebene Umschaltung des Teilfaktors ist das Nachziehen der Oszillatorfrequenz und damit die hier gewünschte positive (bzw., bei Einspeisung des Versatzsignals in den anderen Frequenzteiler 8, negative) Frequenzablage des Bildträger-Ausgangssignals um die Versatzfrequenz ohne Verwendung eines Subtrahiergliedes (bzw., bei negativem Frequenzversatz eines Addiergliedes) realisiert.

Diese Einsparung ergibt eine weitere Aufwands- und Kostenreduzierung der an sich schon (aus handelsüblichen IC's hergestellten) kostengünstigen digitalen Frequenzteiler 7, 8. Diese arbeiten breitbandig für Versatzfrequenzen zwischen etwa 0,2 und 800 kHz ; sie müssen im Gegensatz zu SSM nicht bei jeder Änderung der Versatzfrequenz neu abgeglichen werden und eignen sich daher besonders gut für den Einsatz in Baukastensystemen. Als Referenzsignalquelle 12 ist ein hochgenauer 1-MHz-Oszillator 13 mit nachgeschaltetem Kammgenerator 14 vorgesehen. Dem Mischer 2 der PLL-Schaltung werden damit allerdings nur Signale zugeführt, deren Frequenzen ganzzahlige Vielfache von 1 MHz sind. Zur Erzeugung von nach der Gerber-Norm exakten Referenz-Bildträgerfrequenzen, deren Werte alle auf 0,25 MHz enden, wird aus dem über ein Filter aus dem Kammgenerator ausgekoppelten 1-MHz-Signal mittels eines Frequenzteilers 15 mit dem Teilfaktor 4 ein 250-kHZ-Signal gebildet, das über ein Addierglied 16 zusammen mit einem von einem Präzisionsoffsetgenerator 17 gelieferten Offsetsignal dem Frequenzteiler 7 zugeführt ist. Damit sind in vorteilhafter Weise alle relevanten Fernseh-Bildträgerfrequenzen mit einer einzigen Referenzsignalquelle generiert. Die Offsetfrequenz von 10,45 kHz (=8/12 x Zeilenfrequenz) wird von einem 5,35-MHz-Quarz durch Teilung mittels eines Binärteilers abgeleitet und ist auf $\leq$ 0,3 Hz genau.

Die Frequenzteiler 7, 8 enthalten jeweils das eigentliche Teiler-IC 18, sowie eine aus je zwei gleichen (in einem IC zusammengefaßten) JK-Flip-Flops 19, 20 bestehende Synchronisierschaltung zur taktrichtigen Ansteuerung des Teiler-IC's 18, welches so geschaltet ist, daß der Teilfaktor 40 beträgt, wobei das Umschaltsignal e den Signalzustand H (= High) aufweist.

Zur besseren Verständlichkeit der Funktionsweise wird zunächst von einer Schaltung nach Fig. 3 ausgegangen, bei der die für die Erläuterung der prinzipiellen Arbeitsweise unwichtige Beschaltung, sowie das EXOR-Gatter 21 weggelassen und das zweite JK-Flip-Flop 20 direkt vom Ausgangssignal d angesteuert ist. Tritt nun am Anschluß C im Zuge des Versatzsignals c eine L-H (Low-High)-Flanke auf, so wird das erste JK-Flip-Flop 19 gesetzt. Mit Hilfe des zweiten JK-Flip-Flops 20 wird das Umschaltsignal e für das Teiler-IC 18 mit dessen Ausgangssignal d synchronisiert. Da das Umschaltsignal e während der H-L-Flanke des Ausgangssignals d stabil sein muß, erfolgt die Übernahme des zweiten Flip-Flops 20 auf der L-H-Flanke des Ausgangssignals d. Sobald das Signal übernommen ist, wird das JK-Flip-Flop 19 mit Hilfe des Signals f gelöscht ; bei der nächsten L-H-Flanke des Ausgangssignals d wird das Umschaltsignal e wieder zurückgeschaltet. Das System bleibt nun in diesem Zustand, bis das JK-Flip-Flop 19 durch die nächste L-H-Flanke des Versatzsignals c erneut gesetzt wird.

Da bei dieser Schaltung das zweite JK-Flip-Flop 20 immer bei einer L-H-Flanke des Ausgangssignals d den Zustand des ersten JK-Flip-Flops 19 übernimmt, ist die maximale Frequenz des Versatzsignals c, bei dem der Teiler noch einwandfrei arbeitet, auf die halbe Ausgangsfrequenz, also 38,9/41 MHz : 2 = 474 kHz begrenzt. Im vorliegenden Ausführungsbeispiel wird in einem Addierglied 16 zur Offsetfrequenz eine Frequenz von 250 kHz addiert. Dies geschieht der Einfachheit halber mittels einer Frequenzverdopplerschaltung, in deren Signal durch entsprechende Impulsunterdrückung nur die der Versatzsignalfrequenz entsprechenden Impulse verbleiben. Dabei entsteht jedoch ein Frequenzanteil von 2 x 250 kHz = 500 kHz, der über der genannten Grenzfrequenz liegt. Durch die Einschaltung des EXOR-Gatters 21 gemäß Fig. 3 wird das zweite JK-Flip-Flop 20 um eine halbe Periode früher zurückgesetzt, beendet damit den Umschaltimpuls kurz nach der H-L-Flanke des Ausgangssignals d und kann also bereits bei dessen nächster L-H-Flanke einen neuen Umschaltbefehl des ersten Flip-Flops 19 übernehmen. Die Synchronisierschaltung kann somit Versatzfrequenzen von bis zu 948 kHz verarbeiten.

Die einzelnen Schaltungselemente sind zu folgenden, für den Aufbau von Aufbereitungseinrichtungen für alle Fernseh-Bildträger und unterschiedliche Versatzfrequenzen geeigneten Modulen zusammengefaßt :

« Referenzsignalquelle » 12, « Ausgangsumsetzer » 3, « Phasenvergleicher » 22 und « Versatzgenerator » 23. Der Begrenzerverstärker 9 im Referenzzweig des Phasenvergleichers 22 ist zwar bei Verwendung einer Referenzsignalquelle 12 gemäß dem Ausführungsbeispiel nicht nötig, er macht jedoch das Modul 22 unabhängig von der Art der Referenzsignalquelle 12 allgemein einsetzbar.

Entsprechendes gilt für den mechanischen Umschalter 24 des Versatzgenerators 23, über den das Offsetsignal auf einen der beiden Frequenzteiler 7, 8 schaltbar ist, je nachdem, ob ein positiver oder negativer Offset erfolgen soll.

Insgesamt ist die beschriebene Bildträger-Aufbereitungseinrichtung äußerst einfach und kostensparend aufgebaut, ohne nennenswerten Arbeitsaufwand in einem weiten Bereich einsetzbar und für vorteilhafte Modulbauweise geeignet.

## Patentansprüche

1. Einrichtung zur Bildträgeraufbereitung von Fernsehsignalen durch phasenstarre Verkopplung der Bildträger mittels Anbindung der einzelnen Bildträgerfrequenzen an jeweils eine Referenzfrequenz und durch einen definierten Frequenzversatz zwischen diesen Signalen, mit einer aus einer Phasenvergleichsschaltung (6), einem in seiner Frequenz von dieser geregelten Oszillator (5) und einem damit gesteuerten Mischer (2) bestehenden PLL-Schaltung, bei der die Phasenvergleichsschaltung (6) zum einen von dem aus dem jeweiligen Nutzsignal abgeleiteten Fernseh-Norm-ZF-Signal und zum anderen von dem um die von einem entsprechenden Generator (23) erzeugte Versatzfrequenz versetzten, vom Mischer (2) aus dem Oszillatorsignal und einem aus einer Referenzsignalquelle (12) stammanden Referenzsignal gewonnenen Referenz-ZF-Signal angesteuert ist, dadurch gekennzeichnet, daß jedem der beiden Eingänge (D) der Phasenvergleichsschaltung (6) einer von zwei digitalen Frequenzteilern (7, 8) vorgeschaltet und einer davon (7) derart von dem Versatzsignal angesteuert ist, daß sich sein Teilfaktor im Takte des Versatzsignales verändert.

2. Einrichtung nach Anspruch 1, dadurch gekennzeichnet, daß zwischen Phasenvergleichsschaltung (6) und Oszillator (5) ein Tiefpaß (22) eingeschaltet ist, dessen Zeitkonstante so bemessen ist, daß die Oszillatorfrequenz nicht im Takte des Versatzsignals verändert wird.

3. Einrichtung nach Anspruch 1 oder 2, dadurch gekennzeichnet, daß die Veränderung des Teilfaktors des betreffenden Frequenzteilers (7) eine Umschaltung von n auf n ± 1 ist.

4. Einrichtung nach einem der Ansprüche 1 bis 3, dadurch gekennzeichnet, daß eine einzige Referenzsignalquelle (12) zur Erzeugung der Referenzsignale aller aufzubereitenden Fernsehkanäle vorgesehen ist.

5. Einrichtung nach Anspruch 4, dadurch gekennzeichnet, daß die Referenzsignalquelle aus einem hochgenauen 1-MHz-Oszillator (13) mit nachgeschaltetem Kammgenerator (14) besteht und daß von dem 1-MHz-Signal (13) mittels eines Frequenzteilers (15) ein 250-kHz-Signal abgeleitet und dem zwischen Mischer (2) und Phasenvergleichsschaltung (6) eingefügten Frequenzteiler (7) zugeführt ist.

6. Einrichtung nach Anspruch 4, dadurch gekennzeichnet, daß die Referenzsignalquelle aus einem 250-kHz-Oszillator mit nachgeschaltetem Kammgenerator besteht.

7. Einrichtung nach Anspruch 5, dadurch gekennzeichnet, daß dem 250-kHz-Versatzsignal über ein Addierglied (16) oder dem zwischen Phasenvergleichsschaltung (6) und ZF-Anschluß (1) eingeschalteten Teiler (8) direkt ein Offset-Signal zugeschaltet ist.

8. Einrichtung nach einem der Ansprüche 1 bis 7, dadurch gekennzeichnet, daß jeder Frequenzteiler (7, 8) zwei Flip-Flops (19, 20) enthält, über die gegebenenfalls das Versatz- und/oder das Offsetsignal zuführbar ist und die mit den Frequenzteilern (7, 8) derart zusammengeschaltet sind, daß eine Synchronisierung von Versatzsignal und Teilerausgangssignal und damit die Umschaltung des Teilfaktors zu dem teilerabhängig richtigen Zeitpunkt erfolgt.

9. Einrichtung nach Anspruch 8, dadurch gekennzeichnet, daß ein EXOR-Gatter (21) mit seinen Eingängen zwischen die Ausgänge (D) jedes Frequenzteilers (7, 8) und des zweiten Flip-Flops (20) geschaltet ist und dieses mit seinem Ausgangssignal ansteuert.

## Claims

1. Device for editing picture carriers of television signals by phase-locked cross-coupling of the picture carriers by means of linking the individual picture-carrier frequencies in each case to a reference frequency and by a defined frequency offset between said signals, with a PLL-circuit consisting of a phase-comparison circuit (6), an oscillator (5) of which the frequency is regulated by the latter, and a thus controlled mixer (2), in which PLL-circuit the phase-comparison circuit (6) is driven, firstly, by the television standard intermediate-frequency signal derived from the respective information signal and, secondly, by the reference intermediate-frequency signal obtained by the mixer (2) from the oscillator signal and from a reference signal, said reference signal originating from a reference-signal source (12), said reference intermediate-frequency signal being shifted by the amount of the offset frequency produced by an appropriate generator (23), wherein one of two digital frequency dividers (7, 8) with identical basic dividing factors is series-connected with each of the two inputs (D) of the phase-comparison circuit (6), one of which (7) being driven in such a manner by the offset signal that its dividing factor changes in phase with the offset signal.

2. Device as defined in Claim 1, wherein connected between phase-comparison circuit (6) and oscillator (5) is a low-pass filter (22) whose time constant is such that the oscillator frequency is not changed in phase with the offset signal.

3. Device as defined in Claim 1 or 2, wherein the change in the dividing factor of the relevant frequency divider (7) is a changeover from n to n + 1.

4. Device as defined in any one of Claims 1 to 3, wherein a single reference signal source (12) is provided to produce the reference signals of all television channels to be conditioned.

5. Device as defined in Claim 4, wherein the reference signal source consists of a high-precision 1-MHz oscillator (13) with series-connected standard tone generator (14), and wherein a 250-kHz signal is derived from the 1-MHz signal by means of a frequency divider (15) and is supplied to the frequency divider (7) inserted between mixer (2) and phase-comparison circuit (6).

6. Device as defined in Claim 4, wherein the reference signal source consists of a 250-kHz oscillator with series-connected standard tone generator.

7. Device as defined in Claim 5, wherein an offset signal is directly connected to the 250-kHz offset signal via an adder (16) or to the divider (8) connected between the phase-comparison circuit (6) and the intermediate-frequency connection (1).

8. Device as defined in any one of Claims 1 to 7, wherein each frequency divider (7, 8) contains two flipflops (19, 20) by means of which if necessary the offset signal and/or the offset signal is suppliable and which are interconnected with the frequency dividers (7, 8) in such a way that offset signal and divider output signal are synchronized and hence the dividing factor is changed over at the divider-dependently correct time.

9. Device as defined in Claim 8, wherein an EXOR gate (21) with its inputs is connected between the outputs (D) of each frequency divider (7, 8) and of the second flipflop (20) and drives the latter with its output signal.

## Revendications

1. Dispositif pour l'édition de porteuses d'images de signaux de télévision par couplage à phase rigide des porteuses d'images avec affectation de chaque fréquence porteuse d'images à une fréquence de référence et par un décalage de fréquence défini entre ces signaux, avec un circuit à PLL comprenant un comparateur de phases (6), un oscillateur régulé en fréquence (5) par ce comparateur et un mélangeur (2) commandé par l'oscillateur, dans lequel le comparateur de phases est commandé d'une part par le signal FI conforme aux normes de télévision dérivé du signal utile correspondant et d'autre part par le signal FI de référence décalé de la fréquence intermédiaire générée par un générateur approprié et obtenu à la sortie du mélangeur à partir du signal d'oscillateur et à partir d'un signal de référence provenant d'une source de signal de référence (12), caractérisé par le fait que l'un de deux diviseurs de fréquence numériques (7, 8), qui ont un facteur de division identique, est monté en série avec chacune des deux entrées (D) du comparateur de phases (6) et par le fait que l'un des deux diviseurs de fréquence (7) est commandé par le signal de décalage de telle sorte que son facteur de division varie au rythme du signal de décalage.

2. Dispositif suivant la revendication 1, caractérisé par le fait qu'un filtre passe-bas (22) est intercalé entre le comparateur de phases (6) et l'oscillateur (5), dont la constante de temps est choisie de telle sorte que la fréquence de l'oscillateur ne varie pas de manière synchrone avec le signal de décalage.

3. Dispositif suivant les revendications 1 ou 2, caractérisé par le fait que la modification du facteur de division du diviseur de fréquence concerné (7) correspond au passage de n à n ± 1.

4. Dispositif suivant les revendications 1, 2 ou 3 est caractérisé par le fait qu'une seule source de signal de référence (12) est prévue pour générer les signaux de référence de tous les canaux de télévision à éditer.

5. Dispositif suivant la revendication 4, caractérisé par le fait que la source de signal de référence se compose d'un oscillateur à 1 MHz de haute précision (13) comprenant un générateur de dents de scie disposé en aval (14) et par le fait qu'un signal à 250 kHz obtenu à partir du signal à 1 MHz après passage dans un diviseur de fréquence (15) est appliqué au diviseur de fréquence (7) situé entre le mélangeur (2) et le comparateur de phases (6).

6. Dispositif suivant la revendication 4, caractérisé par le fait que la source de signal de référence se compose d'un oscillateur à 250 kHz et d'un générateur de dents de scie branché en aval.

7. Dispositif suivant la revendication 5, caractérisé par le fait qu'un signal d'offset est ajouté au signal de décalage à 250 kHz par l'intermédiaire d'un additionneur (16) ou du diviseur (8) branché entre le comparateur de phases (6) et la borne FI (1).

8. Dispositif suivant les revendications de 1 à 7, caractérisé par le fait que chaque diviseur de fréquence (7, 8) comprend deux bascules (19, 20) recevant le cas échéant le signal de décalage

et/ou le signal d'offset, câblé avec les diviseurs de fréquence (7, 8) de telle sorte qu'en fonction du diviseur la synchronisation du signal de décalage et du signal de sortie du diviseur et ainsi la commutation du facteur de division se produise au moment opportun.

9. Dispositif suivant la revendication 8, caractérisé par le fait qu'une porte EXOR (21) est disposée entre les sorties (D) de chaque diviseur de fréquence (7, 8) et la deuxième bascule (20), cette dernière étant commandée par le signal de sortie de la porte EXOR.

0 109 963

_Fig.1_

_Fig.2_

*Fig.3*

Fig.4